# EUROPEAN PATENT SPECIFICATION

(11) **EP 3 660 298 B1**
(45) Date of publication and mention of the grant of the patent: **11.02.2026**
(21) Application number: 20153048.2
(22) Date of filing: 19.11.2010
(51) Int. Cl.: F02D 41/00, F02M 26/43

(54) **ENGINE SYSTEM AND METHOD**
MOTORSYSTEM UND VERFAHREN
SYSTÈME DE MOTEUR ET PROCÉDÉ ASSOCIÉ

(30) Priority: 23.09.2010 US 88892810
(43) Date of publication of application: 03.06.2020
(62) Divisional of application: 10782781.8
(73) Proprietor: General Electric Company, Schenectady, NY 12345 (US)
(72) Inventor: Freund, Sebastian W., 85774 München (DE); Fritz, Jassin, 80997 München (DE); Mischler, Robert, Lawrence Park, PA Pennsylvania 16531 (US)
(74) Representative: Novagraaf Group

(56) References cited:
- DE-A1- 102006 049 392
- DE-B4- 102006 049 392
- US-A- 4 201 180
- US-A- 4 231 338
- US-A- 4 364 345
- US-A- 5 121 734
- US-A- 5 894 726
- US-A1- 2009 308 070
- US-B1- 6 789 531
- US-B1- 6 871 642

## Description

### BACKGROUND

### 1. Technical Field

The subject matter described herein relates to internal combustion engines, and to exhaust gas recirculation systems and methods.

### 2. Discussion of Art

Engines include a plurality of cylinders having combustion chambers with pistons disposed in the combustion chambers. Intake air is directed into the combustion chambers and is compressed in the combustion chambers. The ignited fuel generates pressure in the combustion chamber that moves the piston. The ignition of the fuel creates a gaseous exhaust in the combustion chamber. Some engines attempt to change the composition of the intake air by recirculating parts of the exhaust gas back into the intake. Exhaust gas recirculation may be referred to as "EGR".

In a certain configuration, an EGR engine recirculates the gaseous exhaust from one or more dedicated cylinders back into air the intake stream. A cylinder that provides the gaseous exhaust may be referred to as a spender, donor or donating cylinder.

It may sometimes be desirable to have an engine system that has components, features or functions that differ from those EGR engines that are currently available. Likewise, it may be desirable to have engine systems that having modes of operation that differ from those operational modes available on current EGR engines.

US 6 789 531 B1 discloses an engine system for a powered rail vehicle system having at least one diesel electric locomotive with cargo cars, comprising: a plurality of cylinders including one exhaust gas donating cylinders, and five non-donating cylinders; and a control module that controls an operation of the one donating cylinders based on: the operation of the non-donating cylinders, and an effluent characterization index, wherein the effluent characterization index represents a component concentration of gaseous exhaust, and the component is particulate matter or one or more of oxygen, carbon monoxide, carbon dioxide, or oxides of nitrogen, wherein the control module is communicatively coupled with a fuel injector of the donating cylinder to control: when fuel is injected into the one or more donating cylinder, how much fuel is injected into the one or more donating cylinder, and a ratio of fuel to air for a fuel/air mixture that is injected into the one or more donating cylinder, wherein the control module is communicatively coupled with an intake valve of at least one donating cylinder to control an intake valve closure parameter that defines when the intake valve is opened or closed.

### BRIEF DESCRIPTION

Independent claims define the invention in various aspects. Dependent claims state various embodiments of the invention in these aspects.

### BRIEF DESCRIPTION OF THE DRAWINGS

FIG. 1 is a diagram of a powered rail vehicle in accordance with one embodiment.
FIG. 2 is a diagram of a diesel engine system shown in FIG. 1 in accordance with one embodiment.
FIG. 3 is a diagram of a donating cylinder shown in FIG. 2 in accordance with one embodiment.
FIG. 4 iillustrates a timeline of operation of the donating cylinder shown in FIG. 2 according to a multi-stroke cycle in accordance with one embodiment.
FIG. 5 is a flowchart of a control method for the diesel engine system shown in FIG. 1 in accordance with one embodiment.

### DETAILED DESCRIPTION

An engine system is provided as well as a corresponding method of operating the engine system. In one embodiment, the engine system includes a plurality of cylinders including one or more donating cylinders and one or more non-donating cylinders. A control module controls an operation of the one or more donating cylinders relative to, or based on, the operation of the one or more non-donating cylinders.

One or more embodiments are described in connection with powered rail vehicle systems having diesel electric locomotives with trailing passenger or cargo cars. The engine system is a component of a vehicle. Suitable vehicles include those that travel on one or more rails. These embodiments may provide a system and method that controls operating parameters of a donating cylinder of, for example, a diesel or gasoline-powered engine relative to other non-donating cylinders in the engine to reduce an exhaust component, such as nitrogen oxide (NOx) emissions, while avoiding decreases in operating efficiency.

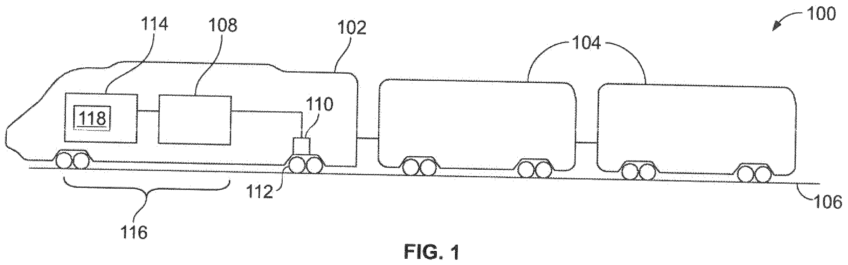

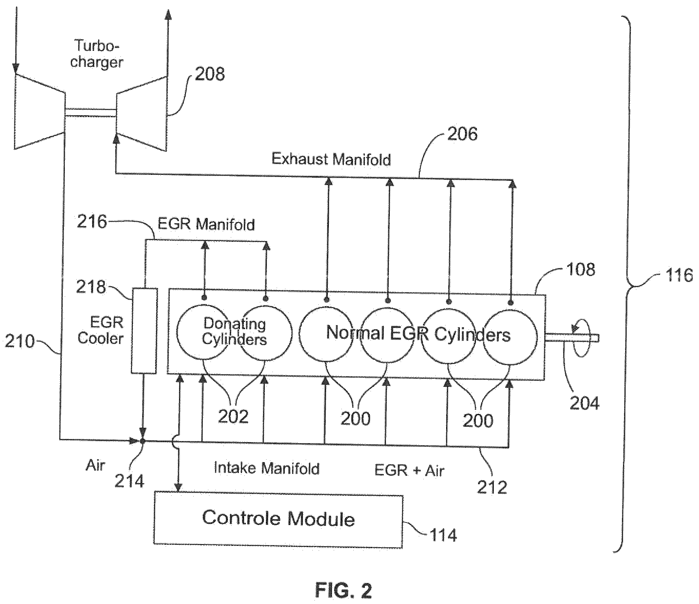

FIG. 1 is a diagram of a powered rail vehicle 100 in accordance with one embodiment. The rail vehicle 100 includes a lead powered unit 102 coupled with several trailing cars 104 that travel along one or more rails 106. In one embodiment, the lead powered unit 102 is a locomotive disposed at the front end of the rail vehicle 100 and the trailing cars 104 are cargo cars for carrying passengers and/or other cargo. The lead powered unit 102 includes a diesel engine system 116. The diesel engine system 116 provides tractive effort to propel the rail vehicle 100. The diesel engine system 116 includes a diesel engine 108 that powers traction motors 110 coupled with wheels 112 of the rail vehicle 100. For example, the diesel engine system may rotate a shaft 204 (shown in FIG. 2) that is coupled with an alternator or generator (not shown). The alternator or generator creates electric current based on rotation of the shaft 204. The electric current is supplied to the traction motors 110, which turn the wheels 112 and propel the rail vehicle 100.

The rail vehicle 100 includes a control module 114 that is communicatively coupled with the diesel engine system. For example, the control module 114 may be coupled with the diesel engine system by one or more wired and/or wireless connections. The control module 114 changes operating parameters of the diesel engine system to change the emission of components from the diesel engine system while avoiding significant decreases in the efficiency of the diesel engine system. For example, the control module 114 may switch and/or adjust operating parameters of the diesel engine system to decrease the NOx emission from the diesel engine system while keeping the efficiency of the engine system in converting fuel into power above an efficiency threshold.

Further, the control module may change the operating parameters as a load demand of the engine system changes. The load demand represents the power demanded or required from the engine system. For example, the load demand on the engine system may represent the horsepower required to propel the vehicle and associated cargo and/or passengers along a determined route. The load demand may change along the route due to variances in grades, speed limits, and the like of the route. The control module adjusts the operating parameters as the load demand changes to fall within or under emission limits while avoiding significant reductions in the efficiency of the engine system.

Suitable control modules may include a processor, such as a computer processor, controller, microcontroller, or other type of logic device, that operates based on sets of instructions stored on a tangible and non-transitory computer readable storage medium 118. The computer readable storage medium may be an electrically erasable programmable read only memory (EEPROM), simple read only memory (ROM), programmable read only memory (PROM), erasable programmable read only memory (EPROM), FLASH memory, a hard drive, or other type of computer memory. Further, the control module may communicate with a remotely located data center to exchange data, receive operating instructions and/or software version updates and patches, provide regulatory compliance information and reporting, and to provide diagnostic and/or prognostic information services.

FIG. 2 is a diagram of the engine system 116 in accordance with one embodiment. The engine system includes the engine system coupled with the control module. The engine system includes several cylinders 200, 202, referred to herein as non-donating cylinders and exhaust gas donating cylinders 202 ("Donating Cylinders"). The non-donating cylinders may be exhaust gas recirculation (EGR) cylinders, which may be referred to as normal EGR cylinders. In the illustrated embodiment, the engine system includes four non-donating cylinders 200 and two donating cylinders 202. Other system may include a different number of the non-donating and/or donating cylinders.

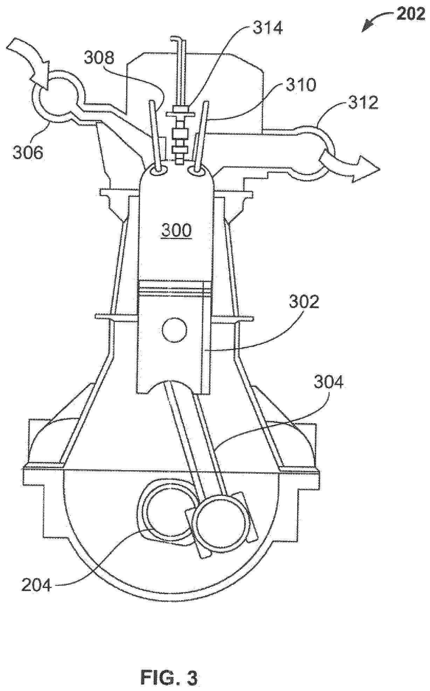

With reference to the illustrated embodiment, the non-donating cylinders 200 and donating cylinders 202 include pistons 302 (shown in FIG. 3) that move within the non-donating cylinders 200 and donating cylinders 202. The movement of the pistons 302 is translated into rotation of the shaft 204. As described above, rotation of the shaft 204 is used to propel the vehicle.

The non-donating cylinders 200 are fluidly coupled with an exhaust manifold 206. The exhaust manifold 206 includes one or more conduits that direct gaseous exhaust from the non-donating cylinders 200 to a turbocharger 208. The non-donating cylinders 200 generate the gaseous exhaust as a result of the combustion of fuel in the non-donating cylinders 200. The gaseous exhaust is received by the turbocharger 208 and may be used to draw in and pump ambient air into an input manifold 210. The input manifold 210 is fluidly coupled with an intake manifold 212 of the engine system 116 by a manifold valve 214.

The donating cylinders 202 are fluidly coupled with an EGR manifold 216. By fluidly coupled, it is meant that the donating cylinders 202 are coupled with the EGR manifold 216 such that a material that flows, such as a gas or liquid, can pass or flow from the donating cylinders 202 to the EGR manifold 216. The EGR manifold 216 includes one or more conduits that direct gaseous exhaust from the donating cylinders 202 to an EGR cooler 218. The EGR cooler 218 is a device that reduces the temperature or thermal energy of the gaseous exhaust from the donating cylinders 202. For example, the EGR cooler 218 may include one or more compressors or fans that cool the gaseous exhaust from the donating cylinders 202. The EGR cooler 218 is fluidly coupled with the manifold valve 214. The manifold valve 214 fluidly couples the input manifold 210 with the EGR cooler 218 such that the gaseous exhaust of the donating cylinders 202 that is cooled by the EGR cooler 218 is mixed with the ambient air from the input manifold 210. The mixture of ambient air and the cooled gaseous exhaust may be referred to as "intake air" or the air that is received by the non-donating cylinders and/or donating cylinders.

The intake air is directed by the manifold valve 214 into the intake manifold 212. The intake manifold 212 directs the intake air to the non-donating cylinders 200 and the donating cylinders 202. The non-donating cylinders 200 and the donating cylinders 202 use the intake air to combust the fuel within the non-donating cylinders 200 and the donating cylinders 202.

FIG. 3 is a diagram of one of the donating cylinders in accordance with one embodiment. While the discussion of FIG. 3 focuses on the donating cylinders, the operation of the donating cylinder 202 also may apply to the non-donating cylinder (as shown in FIG. 2). The donating cylinder includes a combustion chamber 300. The piston 302 is disposed within the combustion chamber 300. In the view shown in FIG. 3, the piston 302 moves up and down within the combustion chamber 300. The piston 302 is coupled to the shaft 204 by a crankshaft 304. The crankshaft 304 converts the linear movement of the piston 302 in the combustion chamber 300 into rotation of the shaft 204. In one embodiment, the shaft 204 is a common shaft that the pistons 302 in each of the non-donating cylinders 200 (shown in FIG. 2) and donating cylinders 202 are joined to by crankshafts 304.

The donating cylinder 202 includes an intake valve 308 that opens to permit intake air to enter into the combustion chamber 300 and closes to prevent additional intake air from entering the combustion chamber 300. For example, the donating cylinder 202 may include an inlet 306 that is fluidly coupled with the intake manifold 212 (shown in FIG. 2). The intake valve 308 is disposed between the combustion chamber 300 and the inlet 306. The intake valve 308 opens to allow intake air from the intake manifold 212 to enter into the combustion chamber 300 and closes to prevent intake air from the intake manifold 212 from entering into the combustion chamber 300. The intake valve 308 may be opened or closed by the control module 114. A fixed or variable cam, such as a variable valve timing (VVT) cam (not shown), may be coupled with the intake valve 308 and configured to be operated by the control module 114 in order to open or close the intake valve 308.

The donating cylinder 202 includes an exhaust valve 310 that opens to direct gaseous exhaust in the combustion chamber 300 out of the combustion chamber 300 and closes to prevent the gaseous exhaust and/or intake air from exiting the combustion chamber 300. For example, the donating cylinder 200 may include an outlet 312 that is fluidly coupled with the exhaust manifold 206 (shown in FIG. 2). The exhaust valve 310 is disposed between the combustion chamber 300 and the outlet 312. The exhaust valve 310 opens to allow gaseous exhaust in the combustion chamber 300 to exit the combustion chamber 300 into the outlet 312 and the exhaust manifold 206. The exhaust valve 310 closes to prevent the gaseous exhaust and/or air in the combustion chamber 300 from exiting the combustion chamber 300 into the exhaust manifold 206. The exhaust valve 310 may be opened or closed by the control module 114. A fixed or variable cam, such as a variable valve timing (VVT) cam (not shown), may be coupled with the exhaust valve 310 and configured to be operated by the control module 114 in order to open or close the exhaust valve 310.

The donating cylinder 202 includes a fuel injector 314 that directs fuel, such as fuel, into the combustion chamber 300. The fuel injector 314 is disposed between a source or supply of fuel (not shown), such as a gas tank, and the combustion chamber 300. The fuel injector 314 injects the fuel into the combustion chamber 300 based on a command or instruction from the control module 114 in one embodiment.

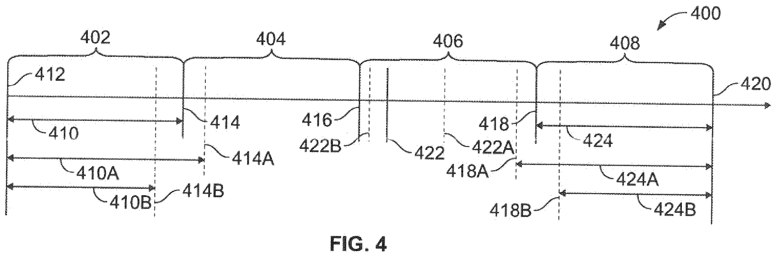

With continued reference to FIG. 3, FIG. 4 illustrates a timeline 400 of operation of the donating cylinder 202 according to a multi-stroke cycle in accordance with one embodiment. While the timeline 400 is described with respect to operation of the donating cylinders 202, alternatively the timeline 400 may apply to operation of the non-donating cylinders 200 (shown in FIG. 2).

The donating cylinder 202 operates based on a multi-stroke cycle in one embodiment. The piston 302 moves within the combustion chamber 300 during the multi-stroke cycle to rotate the shaft 204. Alternatively, the donating cylinder 202 may operate based on a different cycle. The multi-stroke cycle is shown on the timeline 400. In the illustrated embodiment, the multi-stroke cycle is a four-stroke cycle that includes an intake stroke 402, a compression stroke 404, a combustion stroke 406, and an exhaust stroke 408. Alternatively, the multi-stroke cycle may include a different number of strokes. The intake stroke 402 extends from a first time 412 to a subsequent second time 414. The compression stroke 404 extends from the second time 414 to a subsequent third time 416. The combustion stroke 406 extends from the third time 416 to a subsequent fourth time 418. The exhaust stroke 408 extends from the fourth time 418 to a subsequent fifth time 420.

During the intake stroke 402, the inlet valve 308 opens to direct intake air into the combustion chamber 300. The influx of intake air into the combustion chamber 300 drives the piston 302 away from the inlet valve 308 and toward the shaft 204. In the illustrated embodiment, the intake air moves the piston 302 downward.

Following the intake stroke 402 is the compression stroke 404. During the compression stroke 404, the piston 302 moves in an opposite direction toward the fuel injector 314. For example, in the illustrated embodiment, the piston 302 moves upward toward the top of the combustion chamber 300. As the piston 302 moves upward, the volume in the combustion chamber 300 decreases while the intake air in the combustion chamber 300 remains the same. As a result, the intake air in the combustion chamber 300 is compressed by the piston 302. The compression of the intake air heats the intake air inside the combustion chamber 300.

Following the compression stroke 404 is the combustion stroke 406. During the combustion stroke 406, fuel is injected into the combustion chamber 300 by the fuel injector 314. For example, as the piston 302 reaches or approaches the top of the combustion chamber 300, the fuel injector 314 may spray fuel into the combustion chamber 300 in the illustrated embodiment. The compressed and heated intake air in the combustion chamber 300 ignites the fuel in the combustion chamber 300. The fuel is ignited and combusts within the combustion chamber 300. The combustion of the fuel creates increased pressure within the combustion chamber 300 and forces the piston 302 away from the fuel injector 314. For example, the combustion of the fuel may force the piston 302 downward in the view shown in FIG. 3.

Following the combustion stroke 406 is the exhaust stroke 408. The combustion of the fuel within the combustion chamber 300 generates gaseous exhaust in the combustion chamber 300. The gaseous exhaust may include components such as NOx, SOx, and particulate matter (PM). During the exhaust stroke 408, the piston 302 moves back up toward the fuel injector 314 and the exhaust valve 310 opens to direct the gaseous exhaust out of the combustion chamber 300. For example, the exhaust valve 310 may open to permit the gaseous exhaust to flow from the combustion chamber 300 into the outlet 312, and from the outlet 312 into the EGR manifold 216 (shown in FIG. 2). With respect to the non-donating cylinder 200 (shown in FIG. 2), the exhaust valve 310 opens to direct the gaseous exhaust into the outlet 312 and from the outlet 312 into the exhaust manifold 206. The movement of the piston 302 forces the gaseous exhaust out of the combustion chamber 300.

The four strokes 402, 404, 406, 408 of the four-stroke cycle are repeated during operation of the engine system. For example, following the exhaust stroke 408 of a first four-stroke cycle is the intake stroke 402 of a subsequent second four-stroke cycle.

Several operating parameters of the donating cylinders 202 and the non-donating cylinders 200 define the valve timing, injection timing, and/or the amount of fuel used in the multi-stroke cycle. The parameters may be determined or fixed for the non-donating cylinders 200, but are variable for the donating cylinders 202 in one embodiment. For example, the operating parameters of the non-donating cylinders 200 may be determined and/or unchangeable, such as determined ratios of each other that do not change or do not change relative to each other based on the load demand of the engine system and/or changing emission limits. On the other hand, the operating parameters of the donating cylinders 202 may be adjusted relative to the operating parameters non-donating cylinders 200 such that the operating parameters of the donating cylinders 202 may be changed without changing the parameters of the non-donating cylinders 200. The operating parameters of the donating cylinders 202 may be adjusted to reduce the emission of select exhaust gas components by the donating cylinders 202 and/or engine system below emission limits while avoiding reductions in the efficiency of the engine system.

Several operating parameters of the non-donating and donating cylinders 200, 202 are described below. The list of parameters described herein is not exhaustive, but merely provides examples of parameters that may be changed for the donating cylinders 202 relative to the parameters for the non-donating cylinders 200. In one embodiment, the non-donating cylinders 200 operate according to one or more of the operating parameters discussed herein, with the operating parameters being fixed or based on other parameters. Conversely, the operating parameters for the donating cylinders 202 may be changed without changing the same operating parameters of the non-donating cylinders 200.

An intake valve closure (IVC) parameter 410 represents the time period that the intake valve 308 remains open to allow intake air to flow into the combustion chamber 300. The IVC parameter 410 may be expressed as a time period that the intake valve 308 remains open, a time that is relative to an engine rotational angle and at which the intake valve 308 is closed, and/or a valve lift of the intake valve 308. The valve lift may be a distance that the intake valve 308 is opened. The IVC parameter 410 is shown in FIG. 4 as a time period that extends from the first time 412 to the second time 414. The first time 412 may indicate the time when the intake valve 308 is opened and the second time 414 may indicate the time when the intake valve 308 is closed. The control module may change the IVC parameter 410 by increasing the IVC parameter 410 to a longer IVC parameter 410A. A longer IVC parameter 410A extends the second time 414 to a longer second time 414A in order to leave the intake valve 308 open for a longer period of time and permit a larger volume of intake air to be directed into the combustion chamber 300. Alternatively, the IVC parameter 410 may be increased by moving the first time 412 to an earlier point in time and opening the intake valve 308 earlier. The IVC parameter 410 may be shortened to a shorter or smaller IVC parameter 410B. A smaller IVC parameter 410B shortens the second time 414 to a shorter second time 414B, or a second time 414B that occurs closer to the first time 412. Alternatively, the first time 412 may occur later to shorten the IVC parameter 410. Shortening the IVC parameter 410B causes the intake valve 308 to be opened for a shorter period of time to cause a smaller volume of intake air to be directed into the combustion chamber 300.

A start of injection (SOI) parameter 422 represents the time at which the fuel injector 314 begins injecting fuel into the combustion chamber 300. For example, the SOI parameter 422 may be expressed as a time at which the fuel injector 314 commences spraying fuel into the combustion chamber 300 during the combustion stroke 406. The SOI parameter 422 may be adjusted by the control module 114 to vary when fuel is injected into the combustion chamber 300. As shown in FIG. 4, the SOI parameter 422 may be delayed to an SOI parameter 422A. A delayed SOI parameter 422A causes the fuel injector 314 to direct fuel into the combustion chamber 300 at a later point in time. The SOI parameter 422 may be changed to an SOI parameter 422B that occurs sooner, or at an earlier point in time. The SOI parameter 422B causes the fuel injector 314 to direct the fuel into the combustion chamber 300 at an earlier time.

A fueling parameter represents the amount of fuel that is injected into the combustion chamber 300 by the fuel injector 314. For example, the fueling parameter may be expressed as a volume of fuel that is directed into the combustion chamber 300 during the combustion stroke 406. The control module 114 may increase or decrease the fueling parameter. Increasing the fueling parameter causes more fuel to be injected into the combustion chamber 300 by the fuel injector 314 during the combustion stroke 406. Conversely, decreasing the fueling parameter causes less fuel to be injected into the combustion chamber 300 during the combustion stroke 406.

In one example embodiment, during operation of the engine system 116, an operator may increase the engine system load from a relatively lower load point to a relatively higher load point. The increase to the higher load point could cause the total amount of fuel that is provided by a fuel system (such as a fuel tank or storage chamber and associated pumps) to the non-donating and donating cylinders 200, 202 to increase. At a given fueling rate (such as the rate at which fuel is supplied by the fueling system to the cylinders 200, 202), the actual engine rotational speed may decrease relative to a desired or requested engine rotational speed for the higher load point. For example, the engine rotational speed that corresponds with the higher load point may not be achieved by the engine system 116. Instead, the engine system 116 may operate at a lower, actual rotational speed. The control module 114 may monitor and respond to the difference between the actual and requested rotational speeds. The control module 114 can compare the actual to desired rotational speeds to determine a difference in rotational speeds. The control module 114 may consult a look-up table function or equivalent (that may be stored in the storage medium 118) to determine a fueling rate or amount of fuel to be supplied to the donating cylinders 202. That is, the control module 114 may determine, or if a look up table is used, may return, a ratio of fueling rates applicable to the non-donating and donating cylinders 200, 202. For example, this fueling ratio may be a ratio of a fueling rate for the donating cylinders 202 to the non-donating cylinders 200. The fueling rates can be based on the requested rotational speed and/or the load operating conditions of the engine system 116. Multiplying this fueling ratio by the fueling rate for the non-donating cylinders 200 yields the fueling rate for the donor cylinders 202 in one embodiment.

An exhaust valve closure (EVC) parameter 424 represents the time period that the exhaust valve 310 remains open to allow gaseous exhaust in the combustion chamber 300 to flow out of the combustion chamber 300. For example, the EVC parameter 424 may be expressed as a time period that the exhaust valve 310 remains open. The EVC parameter 424 is shown in FIG. 4 as a time period that extends from the fourth time 418 to the fifth time 420, or over the duration of the exhaust stroke 408. The fourth time 418 may represent the time when the exhaust valve 310 is opened and the fifth time 420 may represent the time when the exhaust valve 310 is closed.

The control module 114 may change the EVC parameter 424 to increase or decrease the time period that the exhaust valve 310 is open. As shown in FIG. 4, the EVC parameter 424 may be increased to a longer EVC parameter 424A by moving the time at which the exhaust valve 310 opens, or the fourth time 418, to a fourth time 418A that occurs sooner. Alternatively, the EVC parameter 424 may be increased by moving the time at which the exhaust valve 310 closes, or the fifth time 420, to a later point in time. As the exhaust valve 310 remains open longer, a larger volume of gaseous exhaust may be directed out of the combustion chamber 300.

The EVC parameter 424 may be shortened to a shorter EVC parameter 424B by moving the time at which the exhaust valve 310 opens, or the fourth time 414, to a later fourth time 414B. Alternatively, the EVC parameter 424 may be shortened by moving the time that the exhaust valve 310 closes, or the fifth time 420, to an earlier point in time. Shortening the EVC parameter 424B causes the exhaust valve 310 to be open for a shorter period of time. As the amount of time that the exhaust valve 310 remains open is decreased, less gaseous exhaust is able to escape from the combustion chamber 300.

The IVC parameter 410, SOI parameter 412, fueling parameter, and the EVC parameter 424 may be collectively referred to as the operational parameters of the non-donating and donating cylinders 200, 202. The control module may adjust or change one or more of the operational parameters for the donating cylinders without changing one or more of the operational parameters for the non-donating cylinders. Alternatively, the control module may change an operational parameter simultaneously or concurrently for both the donating and non-donating cylinders based on a change in the operational parameters for the non-donating cylinders.

A donating cylinder may have an operational parameter that differs from another donating cylinder operational parameter. The operational parameters may be the same for all of the donating cylinders. The control module may change one or more of the operational parameters for the donating cylinders by an amount that differs from the change in the operational parameters for another donating cylinder. Alternatively, changes in the operational parameters may be the same for all of the donating cylinders.

The control module may change one or more of the operational parameters of the donating cylinders based on one or more indices of the engine system. For example, the control module may change the operational parameters based on an engine performance index. The engine performance index represents a measurement or quantifiable characterization of the operation of the engine system. In one example, the engine performance index represents a load placed on or power demand of the engine system. In another example, the engine performance index represents a speed of the engine system. The engine performance index may represent a measurement of air-flow through the engine system. In another example, the engine performance index includes a measurement of power generated by the donating cylinders 202. For example, the engine performance index may be a measurement of the horsepower generated by the donating cylinders of the engine system.

The engine performance index may include a measurement of an efficiency of the engine system. For example, the engine performance index may include a measurement of the efficiency of the donating cylinders in converting fuel into power. The engine performance index may include other measurements of the performance or operation of the engine system. In one embodiment, the engine performance index includes multiple measurements of the performance of the engine system. For example, the engine performance index may include or be based on measurements of the power generated by the donating cylinders 202 and the efficiency of the donating cylinders. One or more sensors in communication with the control module may measure the engine performance index.

Other examples of suitable parameters for determining the engine performance index may include one or more of a load placed the engine system, a speed of the engine system, a temperature of the engine system, an air-flow rate through the engine system, a temperature of air flowing through a manifold coupled to the engine system, a temperature of coolant flowing through the engine system, a requested power level demand placed on the engine system, an oxygen content of air entering the engine system, a measured atmospheric pressure adjacent to the engine system, a measured turbocharger speed, a detected turbocharger surge event, or an indication that one or more of the foregoing has a value that will imminently cross a determine threshold.

The control module may change the operational parameters for the donating cylinders based on an effluent characterization index. The effluent characterization index represents a measurement or quantifiable characterization of the gaseous exhaust generated by the non-donating and/or donating cylinders in one embodiment. In one example, the effluent characterization index includes a measurement of an exhaust volume flow rate of the gaseous exhaust from the donating cylinders. The effluent characterization index may be a measurement of the mass flow rate of the gaseous exhaust that flows from the donating cylinders 202 when the exhaust valves 310 of the donating cylinders are open. The exhaust volume flow rate may be measured by a sensor (not shown), such as a mass flow sensor coupled with the control module 114. The exhaust volume flow rate may be expressed as the mass of the gaseous exhaust from the donating cylinders 202 that passes through a surface area per unit of time. In one embodiment, the exhaust volume flow rate may be a measurement of the mass of one or more constituents in the gaseous exhaust of the donating cylinders 202 that pass through a surface per unit time. For example, the exhaust volume flow rate can represent the amount of one or more exhaust gas components, such as NOx, that could flow in the gaseous exhaust.

In another example, the effluent characterization index may include a measurement of a composition of one or more constituents of the gaseous exhaust generated by the engine system. For example, the effluent characterization index may be a concentration of one or more gaseous exhaust components generated by the non-donating and/or donating cylinders 200, 202, such as particulate matter, NOx, or SOx concentration. Alternatively, the effluent characterization index may be a measurement of an oxygen concentration of the gaseous exhaust generated by the non-donating and/or donating cylinders 200, 202.

In one embodiment, the effluent characterization index includes multiple measurements of the gaseous exhaust of the engine system. For example, the effluent characterization index may include or be based on measurements of the exhaust volume flow rate of the gaseous exhaust from the donating cylinders 202 and the concentration of one or more constituents in the gaseous exhaust from the donating cylinders 202.

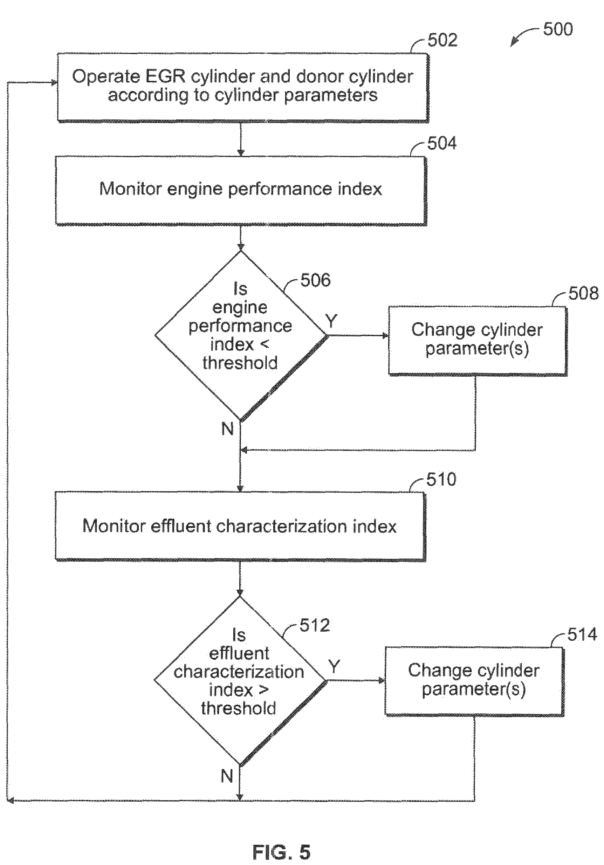

FIG. 5 is a flowchart of a control method 500 for the engine system 116 in accordance with one embodiment. The control method 500 may be used to adjust the operational parameters of the donating cylinders 202 (shown in FIG. 2) relative to the operational parameters of the non-donating cylinders 200 (shown in FIG. 2) in order to reduce the emissions from the engine system while limiting losses in the efficiency of the engine system as a result of decreasing the emission of components. A first fueling parameter for one or more donating cylinders 202 may be based on a second fueling parameter for one or more of the non-donating cylinders 200, such as by the first fueling parameter being a decimal multiplier of the second fueling parameter.

At 502, non-donating and donating cylinders of a engine are operated according to operational parameters. For example, the non-donating cylinder and the donating cylinder of the engine system are operated based on, or relative to, one or more operational parameters. The operational parameters can include, for example, the timing of the strokes 402, 404, 406, 408 and/or amount of fuel that is used to move pistons 302 (shown in FIG. 3) within the non-donating and donating cylinders 200, 202. Other operational parameters can include the IVC parameter 410 (shown in FIG. 4), the SOI parameter 422 (shown in FIG. 4), the fueling parameter, and/or the EVC parameter 424 (shown in FIG. 4).

The IVC parameter 410 (shown in FIG. 4), the SOI parameter 422 (shown in FIG. 4), and the EVC parameter 424 (shown in FIG. 4) define the timing of different events that occur during the four-stroke cycle of the movement of the pistons 302 (shown in FIG. 3) within the non-donating and donating cylinders 200, 202 (shown in FIG. 2). For example, the IVC parameter 410 defines the timing of the opening or closing of the intake valve 308 (shown in FIG. 3), the SOI parameter 422 defines the timing of the injection of fuel into the combustion chamber 300 (shown in FIG. 3) of the non-donating and donating cylinders 200, 202, and the EVC parameter 424 defines the timing of the opening or closing of the exhaust valve 310 (shown in FIG. 3). The fueling parameter defines the amount of fuel that is injected into the combustion chambers 300.

At 504, an engine performance index is monitored. For example, the control module 114 may measure the engine performance index as the power generated by the donating cylinders 202 (shown in FIG. 2) and/or the efficiency of the donating cylinders 202 in converting the fuel injected into the donating cylinders 202 into power. The control module 114 may periodically measure the power and/or efficiency of the donating cylinders 202 to repeatedly monitor the engine performance index of the donating cylinders 202.

At 506, the engine performance index is compared to one or more thresholds. For example, the engine performance index may include a measurement of the power generated by the donating cylinders 202 (shown in FIG. 2) that is compared to a power threshold. If the power generated by the donating cylinders 202 exceeds the power threshold, then the engine performance index may indicate that the operation of the donating cylinders 202 based on the current operational parameters is generating sufficient power. For example, the power generated by the donating cylinders 202 may be sufficient to meet the load demand placed on the engine system by the rail vehicle 100.

Conversely, if the engine performance index does not exceed the power threshold, then the engine performance index may indicate that the operation of the donating cylinders 202 (shown in FIG. 2) based on the current operational parameters may be insufficient to generate sufficient power to meet the load demand of the engine system. As a result, one or more of the operational parameters of the donating cylinders 202 may need to be adjusted to increase the power that is output by the donating cylinders 202.

In another example, the engine performance index may include a measurement of the efficiency of the donating cylinders 202 (shown in FIG. 2) that is compared to an efficiency threshold. If the efficiency of the donating cylinders 202 exceeds the efficiency threshold, then the engine performance index may indicate that the operation of the donating cylinders 202 based on the current operational parameters is operating at a sufficiently high efficiency. On the other hand, if the engine performance index does not exceed the efficiency threshold, then the engine performance index may indicate that the current operational parameters of the donating cylinders 202 may need to be adjusted in order to increase the efficiency of the donating cylinders 202.

In one embodiment, more than one engine performance index is compared to an associated threshold. For example, the power generated by the donating cylinders 202 (shown in FIG. 2) may be compared to a power threshold while the efficiency of the donating cylinders 202 is compared to an efficiency threshold. If at least a determined number of the engine performance indices exceed the associated thresholds, then the engine performance indices may indicate that the operational parameters do not need to be changed to improve the engine performance indices. Alternatively, if less than the determined number of the engine performance indices exceeds the associated thresholds, the engine performance indices may indicate that the operational parameters need to be changed to improve the engine performance indices.

If the engine performance index does not exceed the associated threshold(s), then flow of the method 500 proceeds to 508. If the engine performance index or indices do exceed the associated threshold(s), the flow of the method 500 proceeds to 510.

At 508, one or more of the operational parameters are changed to increase the engine performance index. For example, one or more operational parameters of the donating cylinders 202 (shown in FIG. 2) is changed by the control module 114 in order to increase the power generated by the donating cylinders 202 and/or the efficiency of the donating cylinders 202. In one embodiment, the IVC parameter 410 (shown in FIG. 4) is increased to inject more intake air into the combustion chambers 300 (shown in FIG. 3) of the donating cylinders 202. The increased amount of intake air in the combustion chambers 300 may increase the pressure inside the combustion chambers 300 and increase the power and/or efficiency of the donating cylinders 202.

The fueling parameter may be changed to increase the power and/or efficiency of the donating cylinders 202 (shown in FIG. 2). For example, the fueling parameter may be increased to inject more fuel during the combustion stroke 406 (shown in FIG. 4). As more fuel is injected into the combustion chambers 300 (shown in FIG. 3) of the donating cylinders 202, the combustion of the fuel may create greater pressure in the combustion chambers 300 and drive the pistons 302 (shown in FIG. 3) downward with more force. Consequently, the shaft 204 (shown in FIG. 2) may be rotated with more torque by the pistons 302. As the shaft 204 rotates with more torque, more power or electric current is generated.

In another example, the fueling parameter may be decreased so that less fuel is injected into the combustion chambers 300 (shown in FIG. 3) of the donating cylinders 202 (shown in FIG. 2) during the combustion stroke 406 (shown in FIG. 4). Decreasing the fuel that is injected into the donating cylinders 202 may result in lower pressure and a higher air-fuel ratio. Also, burning less fuel in the donating cylinders 202 (shown in FIG. 2) that may provide for operation of the donating cylinders 202 at lower efficiency compared to the non-donating cylinders 200 may increase the efficiency of the engine system.

The SOI parameter 422 (shown in FIG. 4) may be changed to increase the power and/or efficiency of the donating cylinders 202 (shown in FIG. 2). For example, the SOI parameter 422 may be changed so that fuel is injected into the combustion chambers 300 (shown in FIG. 3) of the donating cylinders 202 at an earlier time. Injecting the fuel into the combustion chambers 300 at an earlier time may increase the pressure generated when the fuel is combusted in the combustion chambers 300. As the pressure increases, the pistons 302 (shown in FIG. 3) may generate greater power, as described above.

While certain examples of changing different operational parameters of the donating cylinders 202 (shown in FIG. 2) in order to change the engine performance index are described above, alternatively other operating parameters of the donating cylinders 202 may be changed based on the engine performance index or indices.

At 510, an effluent characterization index is monitored. The control module 114 may monitor the effluent characterization index by measuring the exhaust volume flow rate at which the gaseous exhaust flows from the donating cylinders 202 (shown in FIG. 2) and/or the concentration of one or more components in the gaseous exhaust coming from the donating cylinders 202. The control module 114 may periodically measure the exhaust volume flow rate and/or the component concentration of the donating cylinders 202 to repeatedly monitor the effluent characterization index of the donating cylinders 202.

At 512, the effluent characterization index is compared to one or more thresholds. For example, the effluent characterization index may include the exhaust volume flow rate of the gaseous exhaust from the donating cylinders 202 that is compared to a flow rate threshold. If the measured exhaust volume flow rate exceeds the flow rate threshold, then the effluent characterization index may indicate that the operation of the donating cylinders 202 based on the current operational parameters is generating too much gaseous exhaust, or that the gaseous exhaust is being produced at a relatively large rate. As the amount of the gaseous exhaust flowing from the donating cylinders 202 increases, the amount of the exhaust component concentration generated by the engine system may increase. Consequently, one or more of the operational parameters of the donating cylinders 202 may need to be adjusted to reduce the exhaust volume flow rate of the gaseous exhaust generated by the donating cylinders 202.

The flow rate threshold may be a determined rate and/or may be based on a location of the engine system. For example, the vehicle may travel through areas having different standards or thresholds for the exhaust component concentrations. As the rail vehicle 100 enters an area with a different standard or threshold, the flow rate threshold may be adjusted to the threshold of the area. The areas may be defined by GPS location, geo-fencing, ambient measurements, wayside or curbside signaling devices, and the like.

Conversely, if the effluent characterization index does not exceed the flow rate threshold, then the effluent characterization index may indicate that the exhaust volume flow rate is sufficiently low that the current operational parameters do not need to be adjusted. For example, the donating cylinders 202 may be generating sufficiently small amounts of gaseous exhaust based on the current operational parameters that the operational parameters do not need to be adjusted to reduce the exhaust volume flow rate.

In another example, the effluent characterization index may include a measurement of the concentration of one or more components in the gaseous exhaust generated by the donating cylinders 202. The component concentration is compared to one or more concentration thresholds to determine if the gaseous exhaust includes too high of a component concentration. If the component concentration exceeds the concentration threshold, then the effluent characterization index may indicate that the operation of the engine system, based on the current operational parameters, is generating too much of a particular component. For example, the donating cylinders may be generating too much NOx. As a result, one or more operational parameters of the donating cylinders may need to be adjusted to reduce the NOx concentration in the gaseous exhaust coming from the engine system. Similar to the flow rate threshold, the concentration threshold may change based on the location or ambient conditions of the vehicle.

On the other hand, if the effluent characterization index does not exceed the concentration threshold, then the effluent characterization index may indicate that the current operational parameters do not need to be adjusted, or may be adjusted to increase efficiency. For example, the engine system may be generating gaseous exhaust that has relatively low concentrations of one or more components based on the current operational parameters. As a result, the operational parameters of the donating cylinders may not need to be changed or may be changed to increase efficiency while increasing the component concentration up to, but not exceeding, the defined threshold.

In one embodiment, more than one effluent characterization index is compared to an associated threshold. For example, the exhaust volume flow rate of the gaseous exhaust generated by the donating cylinders 202 may be compared to a flow rate threshold while the component concentration of the gaseous exhaust form the donating cylinders 202 may be compared to a concentration threshold. If at least a determined number of the effluent characterization indices exceed the associated thresholds, then the effluent characterization indices may indicate that the operational parameters may need to be changed to improve the effluent characterization indices. Alternatively, if less than the determined number of the effluent characterization indices exceeds the associated thresholds, then the effluent characterization indices may not indicate that the operational parameters need to be changed to improve the effluent characterization indices.

If the effluent characterization index does not exceed the associated threshold(s), then flow of the method 500 returns to 502, where the engine system continues to operate based on the operational parameters that may or may not have been adjusted based on the method 500. If the effluent characterization index does exceed the associated threshold(s), the flow of the method 500 proceeds to 514.

At 514, one or more of the operational parameters of the donating cylinders 202 are changed. The operational parameters may be changed to reduce the exhaust volume flow rate of the gaseous exhaust generated by the donating cylinders 202 and/or to reduce the component concentration in the gaseous exhaust generated by the donating cylinders 202.

In one embodiment, the IVC parameter 410 (shown in FIG. 4) is changed to reduce the exhaust volume flow rate of the gaseous exhaust from the donating cylinders 202. The IVC parameter 410 may be decreased to inject less air into the combustion chambers 300 (shown in FIG. 3). The donating cylinders create relatively less gaseous exhaust in response to a decreased amount of air in the combustion chambers 300 in the donating cylinders 202. If the exhaust volume flow rate of the gaseous exhaust from the donating cylinders 202 exceeds the flow rate threshold, then the IVC parameter 410 may be reduced to decrease the exhaust volume flow rate.

The SOI parameter 422 (shown in FIG. 4) may be changed to reduce the exhaust volume flow rate and/or the component concentration of the gaseous exhaust created by the donating cylinders 202. For example, changing the SOI parameter 422 such that the fuel is injected into the combustion chambers 300 (shown in FIG. 3) of the donating cylinders 202 at a later time may decrease the pressure inside the combustion chambers 300. Decreasing the pressure also may reduce the component concentration of the gaseous exhaust.

The fueling parameter may be changed to adjust power, pressure and the concentration of combustion gases in the exhaust created by the donating cylinders 202. For example, increasing the fueling parameter such that more fuel is injected into the combustion chambers 300 (shown in FIG. 3) of the donating cylinders 202 may reduce the amount of oxygen that remains in the gaseous exhaust while increasing the concentration of carbon dioxide (CO2) and water. Reducing the amount of oxygen and increasing the amount of combustion gases in the exhaust gases to be recirculated may prevent oxides of nitrogen (NOx) from forming in the gaseous exhaust of the non-donating cylinders 200.

Once the operational parameters are changed, flow of the method 500 returns to 502, where the donating cylinders 202 continue to operate based on the operational parameters that were adjusted based on the method 500. The method 500 may continue to operate in a loop-wise or feedback loop with the operational parameters being adjusted based on engine performance indices and/or effluent characterization indices in order to reduce the components generated by the donating cylinders 202 while avoiding significant decreases in the efficiency of the donating cylinders 202. For example, the operational parameters may be periodically changed to meet both emission and efficiency targets of the engine system. The method 500 may change the operational parameters to meet the emission and efficiency thresholds or targets as the power demanded by the engine system to propel the rail vehicle 100 changes.

In addition to or as an alternative to the feedback loop described above in connection with the method 500, the operational parameters may be controlled or varied based on a characteristic map and engine parameters such as speed and load as well as desired emission limits. For example, the control module 114 may vary one or more of the operational parameters based on the speed of the engine system, the load demand on the engine system, and/or a determined emission limit. The characteristic map may provide for the value or setting of one or more of the operational parameters based on different values of the speed, load demand, and/or emission limits. When the speed, load demand, and/or emission limit changes, the control module 114 may refer to the characteristic map to determine new or adjusted values for the operational parameters. The characteristic map may be stored on and accessible from the computer readable storage medium 118.

In order to meet both emission and efficiency targets of the engine system, however, the method 500 may attempt to change one or more operational parameters in opposite ways. For example, at 508, in order to increase the engine performance index, the method 500 may determine that the IVC parameter 410 (shown in FIG. 4) should be lengthened to increase the amount of intake air received by the combustion chambers 300 (shown in FIG. 3) and the pressure inside the combustion chambers 300. But, at 514, in order to decrease the effluent characterization index, the method 500 also may determine that the IVC parameter 410 should be shortened to decrease the amount of intake air received by the combustion chambers 300 and the pressure inside the combustion chambers 300.

In an example not according to the invention, the method 500 applies priority criteria or rules to the opposite changes to the operational parameters that are determined by the method 500. For example, the method 500 may give priority to changes to the operational parameters that are based on comparisons of the effluent characterization index to thresholds over changes to the operational parameters that are based on comparisons of the engine performance index to thresholds. If a change to an operational parameter that is based on a comparison of an effluent characterization index to a threshold opposes or otherwise conflicts with a change to the operational parameter that is based on a comparison of an engine performance index to a threshold, then the change that is based on the effluent characterization index is applied to the operational parameter while the change based on the engine performance index is not applied. Alternatively, if a change to an operational parameter that is based on a comparison of an engine performance index to a threshold opposes or otherwise conflicts with a change to the operational parameter that is based on a comparison of an effluent characterization index to a threshold, then the change that is based on the engine performance index is applied to the operational parameter while the change based on the effluent characterization index is not applied.

The scope of the subject matter described herein should, therefore, be determined with reference to the appended claims.

## Claims

1. Engine system (116) for a powered rail vehicle system (100) having at least one diesel electric locomotive (102) with cargo cars (104), comprising:
a plurality of cylinders (200, 202) including one or more exhaust gas donating cylinders (202), especially being directly and fluidly coupled with an exhaust gas recirculation manifold (216), and one or more non-donating cylinders (200); and
a control module (114) that controls an operation of the one or more donating cylinders (202) based on:
the operation of the one or more non-donating cylinders (202),
an engine performance index based on one or more of an air-flow rate through the engine system (116), a temperature of coolant flowing through the engine system (116), an oxygen content of air entering the engine system (116), a measured turbocharger speed or a detected turbocharger surge event, and
an effluent characterization index, wherein the effluent characterization index represents a component concentration of gaseous exhaust, and the component is particulate matter or one or more of oxygen, carbon monoxide, carbon dioxide, or oxides of nitrogen,
wherein the control module (114) is communicatively coupled with a fuel injector (314) of the donating cylinder (202) to control:
when fuel is injected into the one or more donating cylinder (202),
how much fuel is injected into the one or more donating cylinder (202), and
a ratio of fuel to air for a fuel/air mixture that is injected into the one or more donating cylinder (202),
wherein the control module (114) is communicatively coupled with an intake valve (308) of at least one donating cylinder (202) to control an intake valve closure (IVC) parameter that defines when the intake valve (308) is opened or closed,
wherein the control module (114) is configured,
if a change to an operational parameter that is based on a comparison of a first criterion index to a first criterion threshold value conflicts with a change to another operational parameter that is based on a comparison of a second criterion index to a second criterion threshold value, to apply the change that is based on the first criterion index to the operational parameter while the change based on the second criterion index is not applied,
wherein the first criterion is engine performance and the second criterion is effluent characterization,
wherein the operational parameter and the another operational parameter define at least one of valve timing of a multi-stroke cycle, injection timing of the multi-stroke cycle and amount of fuel received by the non-donating cylinder and the donating cylinder during the multi-stroke cycle.

2. The engine system (116) as defined in claim 1, wherein the control module (114) controls the operation of the donating cylinders (202) by affecting a donating cylinder operational parameter in a determined ratio relative to the operation of the non-donating cylinders (200) corresponding operation parameter.

3. The engine system (116) as defined in claim 1, wherein the control module (114) controls the operation of the donating cylinders (202) based on an air to fuel ratio of the non-donating cylinders (200).

4. The engine system (116) as defined in claim 1, wherein the engine performance index is based additionally on one or more of a load placed the engine system (116), a speed of the engine system (116), a temperature of the engine system (116), a temperature of air flowing through a manifold (210) coupled to the engine system (116), a requested power level demand placed on the engine system (116), a measured atmospheric pressure adjacent to the engine system (116), or an indication that one or more of the foregoing has a value that will imminently cross a determine threshold.

5. The engine system (116) as defined in claim 1, wherein the control module (114) is communicatively coupled with one or more of: an exhaust valve (310) of the donating cylinder (202) to control an exhaust valve closure (EVC) parameter that defines when the exhaust valve (310) is opened or closed or a fuel injector (314) to control a start of injection (SOi) parameter.

6. The engine system (116) as defined in claim 1, wherein the control module (114) is communicatively coupled with an engine performance sensor to monitor the engine performance index of the donating cylinder (202) as at least one of a power generated by the donating cylinder (202) or an efficiency of the donating cylinder (202).

7. The engine system (116) as defined in claim 1, wherein the control module (114) is communicatively coupled with an effluent sensor to monitor the effluent characterization index of the gaseous exhaust generated by the donating cylinder (202) as at least one of an exhaust volume flow rate or a component concentration of the gaseous exhaust from the donating cylinder (202).

8. The engine system (116) as defined in claim 1, wherein the one or more non-donating cylinder (200) having a first piston (302) joined to a shaft (204) and moveable within a first combustion chamber (300) of the non-donating cylinder (200) according to the multi-stroke cycle;
the one or more donating cylinder (202) having a second piston (302) joined to the shaft (204) and moveable within a second combustion chamber (300) of the donating cylinder (202) according to the multi-stroke cycle,
the non-donating cylinder (200) and the donating cylinder (202) receiving air and fuel according to operational parameters of the non-donating cylinder (200) and the donating cylinder (202) to ignite the fuel and move the first and second pistons (302) within the first and second combustion chambers (300), respectively; and
the control module (114) being communicatively coupled with the one or more non-donating cylinder (200) and the one or more donating cylinder (202), the control module (114) changing at least one of the operational parameters of the one or more donating cylinder (202) relative to the operational parameters of the one or more non-donating cylinder (200) based on one or more of an engine performance index or an effluent characterization index of gaseous exhaust generated by one or more of the donating and non-donating cylinders (200, 202).

9. The use of an engine system (116) according to one of the preceding claims for a powered rail vehicle system (100) having at least one diesel electric locomotive (102) with cargo cars (104).

10. A method for controlling a plurality of cylinders (200, 202) including one or more exhaust gas donating cylinders (202) of an engine system (116) for a powered rail vehicle system (100) having at least one diesel electric locomotive (102) with cargo cars (104), especially being directly and fluidly coupled with an exhaust gas recirculation manifold (216), and one or more non-donating cylinders (200), the method comprising:
controlling an operation of the one or more donating cylinders (202) based on: the operation of the one or more non-donating cylinders (200),
an engine performance index based on one or more of an air-flow rate through the engine system (116), a temperature of coolant flowing through the engine system (116), an oxygen content of air entering the engine system (116), a measured turbocharger speed or a detected turbocharger surge event, and
an effluent characterization index, wherein the effluent characterization index represents a component concentration of gaseous exhaust, and the component is particulate matter or one or more of oxygen, carbon monoxide, carbon dioxide, or oxides of nitrogen; and
using a fuel injector (314) of the donating cylinder (202) to control:
when fuel is injected into the one or more donating cylinder (202),
how much fuel is injected into the one or more donating cylinder (202), and
a ratio of fuel to air for a fuel/air mixture that is injected into the one or more donating cylinder (202), wherein controlling the operation of the one or more donating cylinders (202) comprises responsively adjusting an intake valve closure (IVC) parameter, wherein the IVC parameter defining when an intake valve of the donating cylinder is opened or closed,
wherein
if a change to an operational parameter that is based on a comparison of a first criterion index to a first criterion threshold value conflicts with a change to the operational parameter that is based on a comparison of a second criterion index to a second criterion threshold value, applying the change that is based on the first criterion index to the operational parameter while the change based on the second criterion index is not applied,
wherein the first criterion is engine performance and the second criterion is effluent characterization,
wherein the operational parameters including at least one of valve timing of the multi-stroke cycle, injection timing of the multi-stroke cycle, or an amount of fuel received by the non-donating cylinder (200) and the donating cylinder (202) during the multi-stroke cycle.

11. The method as defined in claim 10, wherein controlling the operation comprises operating a non-donating cylinder (200) and a donating cylinder (202) of an engine system (116) according to a multi-stroke cycle defined by operational parameters; and the method further comprising:
monitoring at least one of the engine performance index of the donating cylinder (202) or the effluent characterization index of gaseous exhaust generated by at least one of the non-donating or the donating cylinder (200, 202); and
changing at least one of the operational parameters of the multi-stroke cycle of the donating cylinder (202) relative to the operational parameters of the multi-stroke cycle of the non-donating cylinder (200) based on the at least one of the engine performance index or the effluent characterization index.

12. The method as defined in claim 10, wherein controlling the operation comprises responsively adjusting one or more of a start of injection (SOi) parameter, a fueling parameter, and an exhaust valve closure (EVC) parameter of the operational parameters for the donating cylinder (202), the SOi parameter defining when the fuel is injected into the donating cylinder (202), the fueling parameter defining the amount of fuel that is injected into the donating cylinder (202), and the EVC parameter defining when an exhaust valve (310) of the donating cylinder (202) is opened or closed.

13. The method as defined in claim 10, further comprising:
sensing one or more of a load value placed the engine system (116), a speed of the engine system (116), a temperature of the engine system (116), a temperature of air flowing through a manifold (210) coupled to the engine system (116), a requested power level demand placed on the engine system (116), or an atmospheric pressure adjacent to the engine system (116); and
controlling the operation of the donating cylinder (202) by adjusting the timing of an intake valve (308) in the donating cylinder (202), changing an amount or timing of fuel injected by a fuel injector (314) into a donating cylinder (202), or adjusting the timing of an exhaust port in the donating cylinder (202).

## Patentansprüche

1. Triebwerkssystem (116) für ein Schienenfahrzeugsystem (100) mit mindestens einer dieselelektrischen Lokomotive (102) mit Güterwagen (104), umfassend:
eine Vielzahl von Zylindern (200, 202), einschließend einen oder mehrere Abgas-Abgabezylinder (202), die insbesondere direkt und fluidisch mit einem Abgasrückführungsverteiler (216) verbunden sind, und einen oder mehrere Nicht-Abgabezylinder (200); und
ein Steuermodul (114), das den Betrieb des einen oder der mehreren Abgabezylinder (202) basierend auf folgender Faktoren steuert:
den Betrieb des einen oder der mehreren Nicht-Abgabezylinder (202),
einen Triebwerksleistungsindex, basierend auf einem oder mehreren der Werte eines Luftdurchsatzes durch das Triebwerkssystem (116), einer Temperatur des durch das Triebwerkssystem (116) fließenden Kühlmittels, einem Sauerstoffgehalt der in das Triebwerkssystem (116) eintretenden Luft, einer gemessenen Turboladerdrehzahl oder einem erkannten Turboladeranstiegsereignis, und
einen Abgascharakterisierungsindex, wobei der Abgascharakterisierungsindex eine Komponentenkonzentration von gasförmigen Abgasen darstellt und die Komponente Partikel oder eines oder mehrere der Elemente Sauerstoff, Kohlenmonoxid, Kohlendioxid oder Stickoxide ist,
wobei das Steuermodul (114) mit einem Kraftstoffinjektor (314) des Abgabezylinders (202) in Verbindung steht, um Folgendes zu steuern:
wenn Kraftstoff in den einen oder mehrere Abgabezylinder (202) eingespritzt wird,
wie viel Kraftstoff in den einen oder die mehreren Abgabezylinder (202) eingespritzt wird, und
ein Verhältnis von Kraftstoff zu Luft für ein Kraftstoff-Luft-Gemisch, das in den einen oder die mehreren Abgabezylinder (202) eingespritzt wird,
wobei das Steuermodul (114) mit einem Einlassventil (308) mindestens eines Abgabezylinders (202) in Verbindung steht, um einen Einlassventilschließungsparameter (IVC) zu steuern, der definiert, wann das Einlassventil (308) geöffnet oder geschlossen wird,
wobei das Steuermodul (114) konfiguriert ist, um
wenn eine Änderung eines Betriebsparameters, basierend auf einem Vergleich eines ersten Kriteriumindex mit einem ersten Kriteriumschwellenwert, mit einer Änderung eines anderen Betriebsparameters in Konflikt steht, basierend auf einem Vergleich eines zweiten Kriteriumindex mit einem zweiten Kriteriumschwellenwert, die auf dem ersten Kriteriumindex basierende Änderung auf den Betriebsparameter anzuwenden, während die auf dem zweiten Kriteriumindex basierende Änderung nicht angewendet wird.
wobei das erste Kriterium die Triebwerksleistung und das zweite Kriterium die Charakterisierung der Abgase ist,
wobei der Betriebsparameter und der andere Betriebsparameter mindestens einen der Werte Ventilsteuerzeit eines Mehrhubzyklus, Einspritzzeitpunkt des Mehrhubzyklus und Kraftstoffmenge, die der Nicht-Abgabezylinder und der Abgabezylinder während des Mehrhubzyklus erhalten, definieren.

2. Triebwerkssystem (116) nach Anspruch 1, wobei das Steuermodul (114) den Betrieb der Abgabezylinder (202) steuert, indem es einen Betriebsparameter der Abgabezylinder in einem bestimmten Verhältnis zum Betrieb der Nicht-Abgabezylinder (200) entsprechend dem Betriebsparameter beeinflusst.

3. Triebwerkssystem (116) nach Anspruch 1, wobei das Steuermodul (114) den Betrieb der Abgabezylinder (202) basierend auf einem Luft-KraftstoffVerhältnis der Nicht-Abgabezylinder (200) steuert.

4. Triebwerkssystem (116) nach Anspruch 1, wobei der Triebwerksleistungsindex zusätzlich basierend auf einem oder mehreren Faktoren ermittelt wird, darunter einer auf das Triebwerkssystem (116) ausgeübten Last, einer Drehzahl des Triebwerkssystems (116), einer Temperatur des Triebwerkssystems (116), einer Temperatur der durch einen mit dem Triebwerkssystem (116) verbundenen Verteiler (210) strömenden Luft, einer an das Triebwerkssystem (116) gestellten Anforderung hinsichtlich der erforderlichen Leistungsstufe, einem gemessenen atmosphärischen Druck in der Nähe des Triebwerkssystems (116) oder einer Anzeige, dass einer oder mehrere der vorgenannten Werte einen Schwellenwert bald überschreiten werden.

5. Triebwerkssystem (116) nach Anspruch 1, wobei das Steuermodul (114) mit einem oder mehreren der folgenden Elemente in Verbindung steht: einem Auslassventil (310) des Abgabezylinders (202), um einen Auslassventilschließungsparameter (EVC) zu steuern, der definiert, wann das Auslassventil (310) geöffnet oder geschlossen wird, oder einem Kraftstoffinjektor (314), um einen Einspritzbeginnparameter (SOi) zu steuern.

6. Triebwerkssystem (116) nach Anspruch 1, wobei das Steuermodul (114) mit einem Triebwerksleistungssensor in Verbindung steht, um den Triebwerksleistungsindex des Abgabezylinders (202) als mindestens einen der Werte für die vom Abgabezylinder (202) erzeugte Leistung oder den Wirkungsgrad des Abgabezylinders (202) zu überwachen.

7. Triebwerkssystem (116) nach Anspruch 1, wobei das Steuermodul (114) mit einem Abgassensor verbunden ist, um den Abgascharakterisierungsindex des vom Abgabezylinder (202) erzeugten Abgases zu überwachen, der mindestens einen der beiden Werte für den Abgasvolumenstrom oder die Komponentenkonzentration des Abgases aus dem Abgabezylinder (202) umfasst.

8. Triebwerkssystem (116) nach Anspruch 1, wobei der eine oder die mehreren Nicht-Abgabezylinder (200) einen ersten Kolben (302) aufweisen, der mit einer Welle (204) verbunden ist und innerhalb einer ersten Brennkammer (300) des Nicht-Abgabezylinders (200) nach dem Mehrtaktzyklus beweglich ist;
der eine oder mehrere Abgabezylinder (202) einen zweiten Kolben (302) aufweisen, der mit der Welle (204) verbunden ist und innerhalb einer zweiten Brennkammer (300) des Abgabezylinders (202) nach dem Mehrtaktzyklus beweglich ist,
der Nicht-Abgabezylinder (200) und der Abgabezylinder (202) Luft und Kraftstoff nach den Betriebsparametern des Nicht-Abgabezylinders (200) und des Abgabezylinders (202) aufnehmen, um den Kraftstoff zu zünden und den ersten und zweiten Kolben (302) innerhalb der ersten bzw. zweiten Brennkammern (300) zu bewegen; und
wobei das Steuermodul (114) mit dem einen oder den mehreren Nicht-Abgabezylinder (200) und dem einen oder den mehreren Abgabezylinder (202) in Kommunikationsverbindung steht, wobei das Steuermodul (114) mindestens einen der Betriebsparameter des einen oder der mehreren Abgabezylinder (202) relativ zu den Betriebsparametern des einen oder der mehreren Nicht-Abgabezylinder (200) ändert, basierend auf einem oder mehrerer von einem Triebwerksleistungsindex oder einem Abgascharakterisierungsindex der von einem oder mehreren der Abgabe- und Nicht-Abgabezylinder (200, 202) erzeugten gasförmigen Abgase.

9. Verwenden eines Triebwerkssystems (116) nach einem der vorstehenden Ansprüche für ein angetriebenes Schienenfahrzeugsystem (100) mit mindestens einer dieselelektrischen Lokomotive (102) mit Güterwagen (104).

10. Verfahren zum Steuern einer Vielzahl von Zylindern (200, 202), einschließend einen oder mehrere Abgas-Abgabezylinder (202) eines Triebwerkssystems (116) für ein motorisiertes Schienenfahrzeugsystem (100) mit mindestens einer dieselelektrischen Lokomotive (102) mit Güterwagen (104), die insbesondere direkt und fluidisch mit einem Abgasrückführungsverteiler (216) verbunden sind, und einen oder mehrere Nicht-Abgabezylinder (200) umfassen, das Verfahren umfassend:
Steuern eines Betriebes des einen oder der mehreren Abgabezylinder (202) basierend auf dem Betrieb des einen oder der mehreren Nicht-Abgabezylinder (200),
einen Triebwerksleistungsindex, basierend auf einem oder mehreren der Werte eines Luftdurchsatzes durch das Triebwerkssystem (116), einer Temperatur des durch das Triebwerkssystem (116) fließenden Kühlmittels, einem Sauerstoffgehalt der in das Triebwerkssystem (116) eintretenden Luft, einer gemessenen Turboladerdrehzahl oder einem erkannten Turboladeranstiegsereignis, und
einen Abgascharakterisierungsindex, wobei der Abgascharakterisierungsindex eine Komponentenkonzentration von gasförmigen Abgasen darstellt und die Komponente Partikel oder eines oder mehrere der Elemente Sauerstoff, Kohlenmonoxid, Kohlendioxid oder Stickoxide ist; und
Verwenden eines Kraftstoffinjektors (314) des Abgabezylinders (202) zum Steuern von:
wenn Kraftstoff in den einen oder mehrere Abgabezylinder (202) eingespritzt wird,
wie viel Kraftstoff in den einen oder die mehreren Abgabezylinder (202) eingespritzt wird, und
einem Verhältnis von Kraftstoff zu Luft für ein Kraftstoff-Luft-Gemisch, das in den einen oder die mehreren Abgabezylinder (202) eingespritzt wird, wobei das Steuern des Betriebs des einen oder der mehreren Abgabezylinder (202) das reaktive Einstellen eines Einlassventilschließungsparameters (IVC) umfasst, wobei der IVC-Parameter definiert, wann ein Einlassventil des Abgabezylinders geöffnet oder geschlossen wird,
wobei
wenn eine Änderung eines Betriebsparameters, basierend auf einem Vergleich eines ersten Kriteriumindex mit einem ersten Kriteriumschwellenwert, mit einer Änderung des Betriebsparameters in Konflikt steht, basierend auf einem Vergleich eines zweiten Kriteriumindex mit einem zweiten Kriteriumschwellenwert, die auf dem ersten Kriteriumindex basierende Änderung auf den Betriebsparameter anzuwenden, während die auf dem zweiten Kriteriumindex basierende Änderung nicht angewendet wird.
wobei das erste Kriterium die Triebwerksleistung und das zweite Kriterium die Charakterisierung der Abgase ist,
wobei die Betriebsparameter mindestens einen der Werte Ventilsteuerzeitpunkt des Mehrfachhubzyklus, Einspritzzeitpunkt des Mehrfachhubzyklus oder Kraftstoffmenge einschließen, die während des Mehrfachhubzyklus vom Nicht-Abgabezylinder (200) und vom Abgabezylinder (202) aufgenommen wird.

11. Verfahren nach Anspruch 10, wobei das Steuern des Betriebs das Betreiben eines Nicht-Abgabezylinders (200) und eines Abgabezylinders (202) eines Triebwerkssystems (116) nach einem durch Betriebsparameter definierten Mehrhubzyklus umfasst. und das Verfahren ferner umfassend:
Überwachen mindestens des Triebwerksleistungsindex des Abgabezylinders (202) oder des Abgascharakterisierungsindex des gasförmigen Abgases, das von mindestens einem der Nicht-Abgabe- oder Abgabezylinder (200, 202) erzeugt wird; und
Ändern mindestens eines der Betriebsparameter des Mehrfachhubzyklus des Abgabezylinders (202) relativ zu den Betriebsparametern des Mehrfachhubzyklus des Nicht-Abgabezylinders (200) basierend auf mindestens einem der beiden Indizes, nämlich des Triebwerksleistungsindex oder des Abgascharakterisierungsindex.

12. Verfahren nach Anspruch 10, wobei das Steuern des Betriebs das reaktive Einstellen eines oder mehrerer der Betriebsparameter für den Abgabezylinder (202) umfasst, nämlich eines Einspritzbeginnparameters (SOi), eines Kraftstoffzufuhrparameters und eines Auslassventilschließungsparameters (EVC), wobei der SOi-Parameter definiert, wann der Kraftstoff in den Abgabezylinder (202) eingespritzt wird, der Kraftstoffzufuhrparameter die Kraftstoffmenge definiert, die in den Abgabezylinder (202) eingespritzt wird, und der EVC-Parameter definiert, wann ein Auslassventil (310) des Abgabezylinders (202) geöffnet oder geschlossen wird.

13. Verfahren nach Anspruch 10, ferner umfassend:
Erfassen eines oder mehrerer der Werte eines Lastwertes, der auf das Triebwerkssystem (116) ausgeübt wird, einer Drehzahl des Triebwerkssystems (116), einer Temperatur des Triebwerkssystems (116), einer Temperatur der Luft, die durch einen mit dem Triebwerkssystem (116) verbundenen Verteiler (210) strömt, einer auf das Triebwerkssystem (116) ausgeübten geforderten Leistungsstufe oder eines Luftdrucks in der Nähe des Triebwerkssystems (116) und
Steuern des Betriebs des Abgabezylinders (202) durch Einstellen des Zeitpunkts eines Einlassventils (308) im Abgabezylinder (202), Ändern der Menge oder des Zeitpunkts der Kraftstoffeinspritzung durch einen Kraftstoffinjektor (314) in einen Abgabezylinder (202) oder Einstellen des Zeitpunkts einer Auslassöffnung im Abgabezylinder (202).

## Revendications

1. Système de moteur (116) pour un système de véhicule ferroviaire motorisé (100) ayant au moins une locomotive diesel-électrique (102) avec des wagons de fret (104), comprenant :
une pluralité de cylindres (200, 202) comportant un ou plusieurs cylindres donneurs de gaz d'échappement (202), spécialement accouplés directement et fluidiquement à un collecteur de recirculation de gaz d'échappement (216), et un ou plusieurs cylindres non donneurs (200) ; et
un module de commande (114) qui commande un fonctionnement du ou des cylindres donneurs (202) sur la base :
du fonctionnement du ou des cylindres non donneurs (202),
d'un indice de performance de moteur basé sur un ou plusieurs parmi un débit de l'air à travers le système de moteur (116), une température de liquide de refroidissement s'écoulant à travers le système de moteur (116), une teneur en oxygène de l'air entrant dans le système de moteur (116), une vitesse de turbocompresseur mesurée ou un événement de pompage de turbocompresseur détecté, et
d'un indice de caractérisation d'effluent, dans lequel l'indice de caractérisation d'effluent représente une concentration en composant d'un échappement gazeux, et le composant est une matière particulaire ou un ou plusieurs parmi oxygène, monoxyde de carbone, dioxyde de carbone, ou oxydes d'azote,
dans lequel le module de commande (114) est couplé en communication à un injecteur de carburant (314) du cylindre donneur (202) pour commander :
lorsque le carburant est injecté dans le ou les cylindres donneurs (202),
la quantité de carburant qui est injectée dans le ou les cylindres donneurs (202), et
un rapport carburant/air pour un mélange carburant/air qui est injecté dans le ou les cylindres donneurs (202),
dans lequel le module de commande (114) est couplé en communication à une soupape d'admission (308) d'au moins un cylindre donneur (202) pour commander un paramètre de fermeture de soupape d'admission (IVC) qui définit le moment où la soupape d'admission (308) est ouverte ou fermée,
dans lequel le module de commande (114) est configuré,
si un changement d'un paramètre opérationnel qui est basé sur une comparaison d'un premier indice de critère à une valeur seuil de premier critère entre en conflit avec un changement d'un autre paramètre opérationnel qui est basé sur une comparaison d'un deuxième indice de critère à une deuxième valeur seuil de critère, appliquer le changement qui est basé sur le premier indice de critère au paramètre opérationnel alors que le changement basé sur le deuxième indice de critère est non appliqué,
dans lequel le premier critère est la performance du moteur et le second critère est la caractérisation de l'effluent,
dans lequel le paramètre opérationnel et l'autre paramètre opérationnel définissent au moins l'un parmi le calage des soupapes d'un cycle à temps multiples, le calage d'injection du cycle à temps multiples et la quantité de carburant reçue par le cylindre non donneur et le cylindre donneur pendant le cycle à temps multiples.

2. Système de moteur (116) selon la revendication 1, dans lequel le module de commande (114) commande le fonctionnement des cylindres donneurs (202) en affectant un paramètre opérationnel d'un cylindre donneur dans un rapport déterminé par rapport au fonctionnement du paramètre opérationnel correspondant des cylindres non donneurs (200).

3. Système de moteur (116) selon la revendication 1, dans lequel le module de commande (114) commande le fonctionnement des cylindres donneurs (202) sur la base d'un rapport air/carburant des cylindres non donneurs (200).

4. Système de moteur (116) selon la revendication 1, dans lequel l'indice de performance de moteur est basé en outre sur une ou plusieurs parmi une charge placée sur le système de moteur (116), un régime du système de moteur (116), une température du système de moteur (116), une température de l'air circulant à travers un collecteur (210) couplé au système de moteur (116), une demande de niveau de puissance demandée placée sur le système de moteur (116), une pression atmosphérique mesurée adjacente au système de moteur (116), ou une indication qu'un ou plusieurs de ce qui précède a une valeur qui va franchir de manière imminente un seuil de détermination.

5. Système de moteur (116) selon la revendication 1, dans lequel le module de commande (114) est couplé en communication avec un ou plusieurs parmi : une soupape d'échappement (310) du cylindre donneur (202) pour commander un paramètre de fermeture de soupape d'échappement (EVC) qui définit le moment où la soupape d'échappement (310) est ouverte ou fermée ou un injecteur de carburant (314) pour commander un paramètre de début d'injection (SOi).

6. Système de moteur (116) selon la revendication 1, dans lequel le module de commande (114) est couplé en communication à un capteur de performance de moteur pour surveiller l'indice de performance de moteur du cylindre donneur (202) en tant qu'au moins l'une parmi une puissance générée par le cylindre donneur (202) ou un rendement du cylindre donneur (202).

7. Système de moteur (116) selon la revendication 1, dans lequel le module de commande (114) est couplé en communication à un capteur d'effluent pour surveiller l'indice de caractérisation d'effluent de l'échappement gazeux généré par le cylindre donneur (202) en guise d'au moins l'un parmi un débit volumique d'échappement ou une concentration en composant de l'échappement gazeux provenant du cylindre donneur (202).

8. Système moteur (116) selon la revendication 1, dans lequel le ou les cylindres non donneurs (200) ayant un premier piston (302) relié à un arbre (204) et pouvant se déplacer à l'intérieur d'une première chambre de combustion (300) du cylindre non donneur (200) selon le cycle à temps multiples ;
le ou les cylindres donneurs (202) ayant un second piston (302) relié à l'arbre (204) et pouvant se déplacer à l'intérieur d'une seconde chambre de combustion (300) du cylindre donneur (202) selon le cycle à temps multiples,
le cylindre non donneur (200) et le cylindre donneur (202) recevant de l'air et du carburant selon des paramètres opérationnels du cylindre non donneur (200) et du cylindre donneur (202) afin d'enflammer le carburant et de déplacer les premier et second pistons (302) à l'intérieur des première et seconde chambres de combustion (300), respectivement ; et
le module de commande (114) étant accouplé en communication avec le ou les cylindres non donneurs (200) et le ou les cylindres donneurs (202), le module de commande (114) changeant au moins l'un des paramètres opérationnels du ou des cylindres donneurs (202) par rapport aux paramètres opérationnels du ou des cylindres non donneurs (200) sur la base d'un ou plusieurs parmi un indice de performance de moteur ou un indice de caractérisation d'effluent d'échappement gazeux généré par un ou plusieurs cylindres donneurs et non donneurs (200, 202).

9. Utilisation d'un système de moteur (116) selon l'une des revendications précédentes pour un système de véhicule ferroviaire motorisé (100) ayant au moins une locomotive diesel-électrique (102) avec des wagons de fret (104).

10. Procédé de commande d'une pluralité de cylindres (200, 202) comportant un ou plusieurs cylindres donneurs de gaz d'échappement (202) d'un système de moteur (116) pour un système de véhicule ferroviaire motorisé (100) ayant au moins une locomotive diesel-électrique (102) avec des wagons de fret (104), en particulier étant directement et fluidiquement accouplés à un collecteur de recirculation de gaz d'échappement (216), et à un ou plusieurs cylindres non donneurs (200), le procédé comprenant :
la commande d'un fonctionnement du ou des cylindres donneurs (202) en fonction du : fonctionnement du ou des cylindres non donneurs (200),
d'un indice de performance de moteur basé sur un ou plusieurs parmi un débit de l'air à travers le système de moteur (116), une température de liquide de refroidissement s'écoulant à travers le système de moteur (116), une teneur en oxygène de l'air entrant dans le système de moteur (116), une vitesse de turbocompresseur mesurée ou un événement de pompage de turbocompresseur détecté, et
d'un indice de caractérisation d'effluent, dans lequel l'indice de caractérisation d'effluent représente une concentration en composant d'un échappement gazeux, et le composant est une matière particulaire ou un ou plusieurs parmi oxygène, monoxyde de carbone, dioxyde de carbone, ou oxydes d'azote ; et
l'utilisation d'un injecteur de carburant (314) du cylindre donneur (202) pour commander :
lorsque le carburant est injecté dans le ou les cylindres donneurs (202),
la quantité de carburant qui est injectée dans le ou les cylindres donneurs (202), et
un rapport carburant/air pour un mélange carburant/air qui est injecté dans la ou les cylindres donneurs (202), dans lequel la commande du fonctionnement de la ou des cylindres donneurs (202) comprend l'ajustement réactif d'un paramètre de fermeture de soupape d'admission (IVC), dans lequel le paramètre IVC définit le moment où une soupape d'admission de la cylindre donneuse est ouverte ou fermée,
dans lequel
si un changement d'un paramètre opérationnel qui est basé sur une comparaison d'un premier indice de critère à une valeur seuil de premier critère entre en conflit avec un changement du paramètre opérationnel qui est basé sur une comparaison d'un deuxième indice de critère à une deuxième valeur seuil de critère, appliquer le changement qui est basé sur le premier indice de critère au paramètre opérationnel alors que le changement basé sur le deuxième indice de critère est non appliqué,
dans lequel le premier critère est la performance du moteur et le second critère est la caractérisation de l'effluent,
dans lequel le paramètre opérationnel et l'autre paramètre opérationnel définissent au moins l'un parmi le calage des soupapes d'un cycle à temps multiples, le calage d'injection du cycle à temps multiples et la quantité de carburant reçue par le cylindre non donneur (200) et le cylindre donneur (202) pendant le cycle à temps multiples.

11. Procédé selon la revendication 10, dans lequel la commande du fonctionnement comprend le fonctionnement d'un cylindre non donneur (200) et d'un cylindre donneur (202) d'un système de moteur (116) selon un cycle à plusieurs temps défini par des paramètres fonctionnels ; et le procédé comprenant en outre :
la surveillance d'au moins l'un parmi l'indice de performance de moteur du cylindre donneur (202) ou l'indice de caractérisation d'effluent d'échappement gazeux généré par au moins l'un parmi le cylindre non donneur ou le cylindre donneur (200, 202) ; et
la modification d'au moins l'un des paramètres opérationnels du cycle à plusieurs temps du cylindre donneur (202) par rapport aux paramètres opérationnels du cycle à plusieurs temps du cylindre non donneur (200) en fonction de l'au moins un parmi l'indice de performance de moteur ou l'indice de caractérisation d'effluent.

12. Procédé selon la revendication 10, dans lequel la commande du fonctionnement comprend l'ajustement réactif d'un ou plusieurs paramètres parmi un paramètre de début d'injection (SOi), un paramètre de ravitaillement, et un paramètre de fermeture de soupape d'échappement (EVC) des paramètres opérationnels pour le cylindre donneur (202), le paramètre SOi définissant le moment où le carburant est injecté dans le cylindre donneur (202), le paramètre de ravitaillement définissant la quantité de carburant qui est injectée dans le cylindre donneur (202), et le paramètre EVC définissant le moment où une soupape d'échappement (310) du cylindre donneur (202) est ouverte ou fermée.

13. Procédé selon la revendication 10, comprenant en outre :
la détection d'une ou plusieurs parmi une valeur de charge placée le système moteur (116), un régime du système moteur (116), une température du système moteur (116), une température de l'air circulant à travers un collecteur (210) couplé au système moteur (116), une demande de niveau de puissance demandée placée sur le système moteur (116), ou une pression atmosphérique adjacente au système moteur (116) ; et
la commande du fonctionnement du cylindre donneur (202) en réglant le calage d'une soupape d'admission (308) dans le cylindre donneur (202), en modifiant une quantité ou un calage de carburant injecté par un injecteur de carburant (314) dans un cylindre donneur (202), ou en réglant le calage d'un orifice d'échappement dans le cylindre donneur (202).
